# EUROPEAN PATENT SPECIFICATION

(11) **EP 2 719 490 B1**
(45) Date of publication and mention of the grant of the patent: **27.04.2016**
(21) Application number: 12188185.8
(22) Date of filing: 11.10.2012
(51) Int. Cl.: B23D 77/00

(54) **Cutting head and cutting tool having a replaceable cutting head**
Schneidkopf und Schneidwerkzeug mit auswechselbarem Schneidkopf
Tête de coupe et outil de coupe ayant une tête de coupe remplaçable

(43) Date of publication of application: 16.04.2014
(73) Proprietor: Seco Tools AB, 737 82 Fagersta (SE)
(72) Inventor: Rimet, Lilian, 38 160 Saint Sauveur (FR)
(74) Representative: Klöfver, Jörgen

(56) References cited:
- EP-A1- 0 181 093
- EP-A1- 0 210 128
- EP-A1- 1 674 182
- WO-A1-2011/108108
- FR-A1- 2 285 224

## Description

### BACKGROUND AND SUMMARY

The present invention relates to a cutting head for a cutting tool and, more particularly, to a replaceable cutting head.

It is often useful to provide replaceable cutting heads on toolholders to permit replacing small, relatively quickly worn parts of a cutting tool without also requiring replacement of larger shank structures. One solution for attaching a replaceable cutting head to a toolholder is provided by the PRECIMASTER head reamer tool available from Seco Tools AB, Fagersta, Sweden, i.e. EP 1038620 (B1). The attachment arrangement provided by the PRECIMASTER tool provides a number of strengths, such as run out precision, ease of use, and permitting sending coolant or flushing liquid through the tool. However, transmission of torque between the shank and the cutting head is done via a pin that extends through the shank and the cutting head. It is also difficult to form the entire cutting head in a monobloc construction because of complex shapes used for connection of the cutting head to the shank. This drawback has made it necessary to braze cutting inserts onto a steel body, which has made it impossible to provide larger numbers of teeth or cutting edges on smaller diameter cutting heads. For example, it is not possible to have six teeth on cutting heads with 10 mm or 12 mm diameters. Certain cutting head designs, such as in EP0181093A1, present difficulties because they require complex arrangements for torque transmission that present difficulties with respect to size or strength of the toolholders that would receive them.

Document FR 2 285 224 shows a cuting head according to the preamble of claim 1.

It is desirable to provide a cutting head and a cutting tool that can be made in a monobloc construction in very small diameters while permitting provision of large numbers of teeth. It is also desirable to provide a cutting head and cutting tool that provide a simple torque transmission arrangement.

According to the present invention, a cutting head for a cutting tool comprises the features of claim 1.

According to another aspect of the present invention, a cutting tool comprises a cutting head with the features of claim 1, comprising a cutting portion and a shank portion, the shank portion having a first end adjacent the cutting portion and a second end, the cutting portion and the shank portion being integrally formed of a uniform material, the cutting portion comprising a plurality of integrally formed cutting edges, and the shank portion having a first portion of the shank portion having a first end and a second end, the first end of the first portion of the shank portion being closer to the cutting portion than the second end, the first portion of the shank portion having a first diameter, and a toolholder comprising a body comprising a first end and a second end, and an axial opening extending from the first end toward the second end, the axial opening comprising a first portion having a first diameter at least as large as the first diameter of the first portion of the shank portion. The first portion of the shank portion has an exterior surface comprising at least one axially extending recess extending from an end of the first portion of the shank portion furthest from the cutting portion toward the first end of the shank portion of the shank portion, the first portion of the axial opening has an interior surface comprising at least one axially extending recess, and at least one ball or axially extending pin is disposed in the at least one axially extending recess of the exterior surface of the first portion of the shank portion and the at least one axially extending recess of the interior surface of the first portion of the axial opening so that the cutting head is non-rotatable relative to the toolholder.

### BRIEF DESCRIPTION OF THE DRAWINGS

The features and advantages of the present invention are well understood by reading the following detailed description in conjunction with the drawings in which like numerals indicate similar elements and in which:
FIGS. 1A, 1B, and 1C are top perspective, bottom perspective, and side views, respectively, of a cutting head according to an aspect of the present invention;
FIGS. 2A, 2B, 2C, and 2D are perspective exploded, perspective, partial perspective, and cross-sectional views of a cutting tool according to an aspect of the present invention; and
FIG. 3 is a perspective view of a toolholder according to an aspect of the present invention.

### DETAILED DESCRIPTION

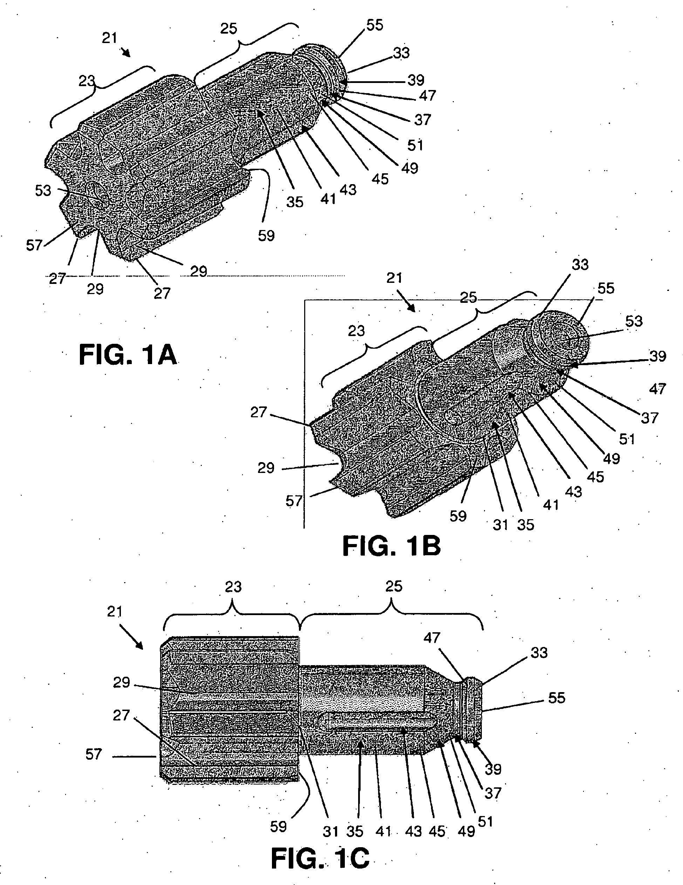

A cutting head 21 for a cutting tool is seen in FIGS. 1A-1C. The cutting head 21 can be used with a plurality of different types of toolholders to form the cutting tool. The cutting head 21 comprises a cutting portion 23 and a shank portion 25. The cutting portion 23 comprises a plurality of integrally formed cutting edges 27. The cutting edges 27 at least partially define a corresponding plurality of flutes 29. The cutting edges 27 and flutes 29 can be helical or, as seen in FIGS. 1A-1C, straight, i.e., generally parallel to the longitudinal axis of the cutting head 21.

The shank portion 25 has a first end 31 adjacent the cutting portion 23 and a second end 33. The shank portion 25 ordinarily has a smaller maximum width or diameter than a widest portion of the cutting portion The shank portion 25 has a first portion 35 having a first diameter, a second portion 37 having a second diameter smaller than the first diameter, and a third portion 39 having a third diameter larger than the second diameter. The first portion 35, the second portion 37, and the third portion 39 are ordinarily all cylindrical, i.e., have exterior surfaces that extend parallel to the longitudinal axis of the cutting head 21, and, more particularly, are ordinarily all circularly cylindrical, i.e., circular in cross-section. The third diameter is smaller than the first diameter. The first portion 35 of the shank portion 25 is closer to the first end 31 of the shank portion than the second and third portions 37 and 39 of the shank portion and the third portion of the shank portion is disposed closer to the second end 33 of the shank portion than the first and second portions.

The first portion 35 has an exterior surface 41 comprising at least one axially extending recess 43 extending from an end 45 of the first portion closest to the second portion 37 toward the first end 31 of the shank portion. Ordinarily, a plurality of axially extending recesses 43 are equally spaced around the first portion 35, such as three recesses spaced every 120° around the longitudinal axis of the cutting head 21. A surface of each recess 43 has a radius that is less than a radius of the exterior surface 41 of the first portion 35 of the shank portion 25.

While the first portion 35 of the shank portion 25 might be adjacent to the second portion 37 of the shank portion, and second portion of the shank portion might be adjacent to the third portion 39 of the shank portion, ordinarily a transition region 47 is provided between the third portion of the shank portion and the second portion of the shank portion and a transition region 49 is provided between the first portion of the shank portion and the second portion of the shank portion. The transition regions 47 and 49 are ordinarily frustoconical. The one or more axially extending recesses 43 end on a surface 51 of the frustoconical transition region 49 between the first portion 35 of the shank portion 25 and the second portion 37 of the shank portion.

A passage 53 can be provided through the cutting head 21 extending from an end 55 of the cutting head by the shank portion 25 toward an opposite end 57 of the cutting head by the cutting portion 23. The passage 53 can be used for delivering fluid to the cutting head 21 during a cutting operation to facilitate cooling and/or flushing of debris. Ordinarily, the passage 53 extends from the end 55 of the cutting head 21 to the opposite end 57 of the cutting head along a central axis of the cutting portion. The passage 53 may, however, be offset from the central axis of the cutting head 21, multiple passages may be provided, and parts or all of the passages may extend at angles to the longitudinal axis of the cutting tool, such as for delivering fluid to points below the end 57 of the cutting head 21.

The cutting head 21 structure as described facilitates integrally forming the cutting head of a uniform material, i.e., as a so-called "monobloc", such as entirely forming the cutting head of a injection molded or pressed, and sintered cemented carbide material. The material may also be high speed steel or cemented carbide that is formed by machining operations such as grinding. By the term "cemented carbide" is here meant WC, TiC, TaC, NbC, etc., in sintered combination with a binder metal such as, for instance, Co or Ni. The cutting head is preferably at least partly coated with layers of, e.g., Al₂O₃, TiN and/or TiCN. The shapes of the parts of the cutting head 21 need not be complex and can be easily pressed without the need to braze cutting inserts onto a steel body. The simple shape facilitates providing a relatively large number of cutting edges 27 on relatively small diameter cutting portions 23. For example, on cutting heads 21 with cutting portions 23 having 10 mm or 12 mm diameters, or diameters no greater than 15 mm, up to about 6 cutting edges 27 have been formed and, on cutting heads with cutting portions no greater than 16 mm, about eight cutting edges having been provided.

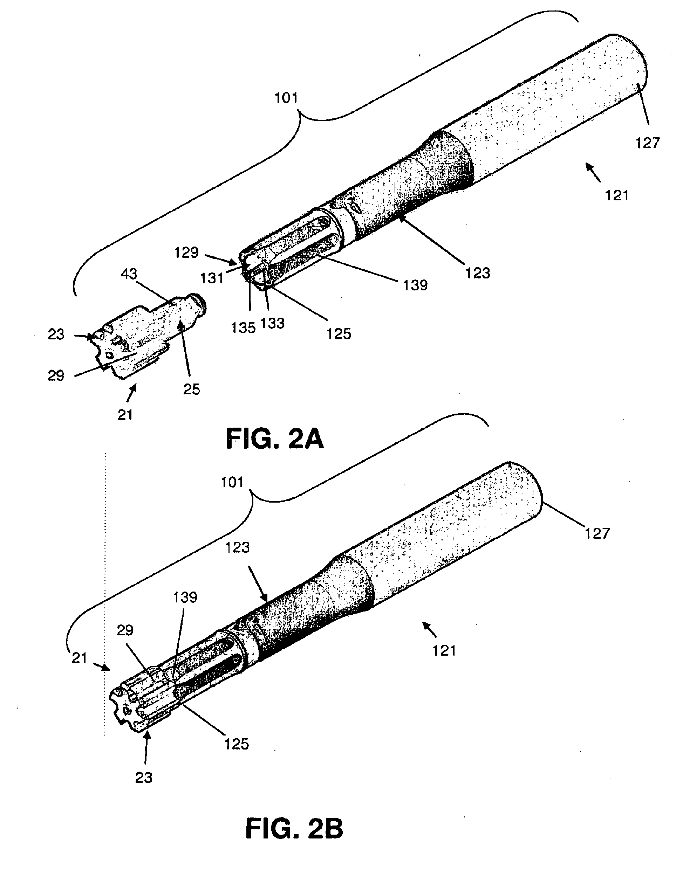

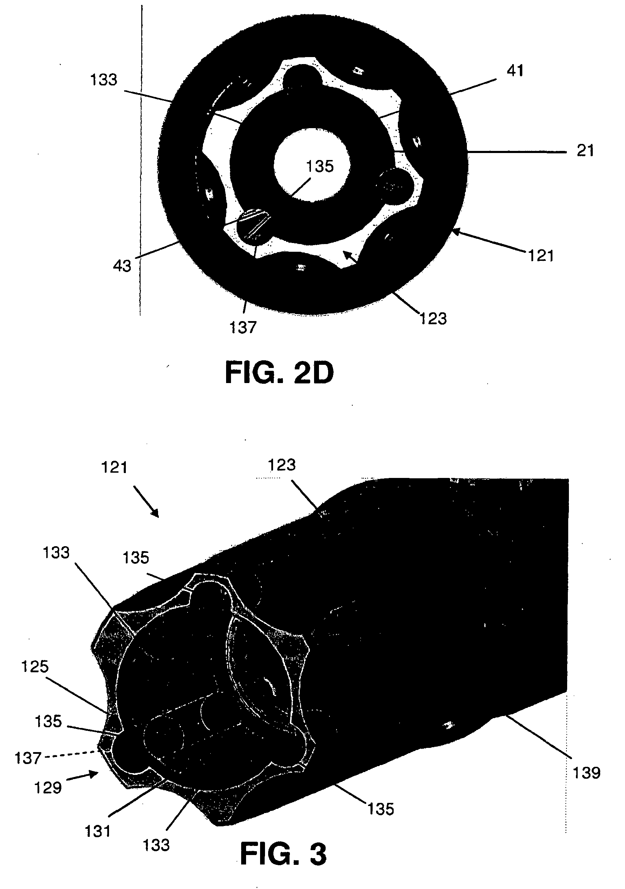

As seen in FIGS. 2A-2D, the cutting head 21 can be used in a cutting tool 101 comprising a toolholder 121. The toolholder 121 comprises a body 123 comprising a first end 125 and a second end 127, and an axial opening 129 (FIGS. 2A and 3) extending from the first end toward the second end. The axial opening 129 comprises a first portion 131 having a first diameter at least as large as the first diameter of the first portion 35 of the shank portion 25 so that the shank portion is adapted to extend into the axial opening, usually up to a point where the bottom 59 of the cutting portion 23 of the cutting head 21 abuts or is close to the first end 125 of the body 123 of the toolholder.

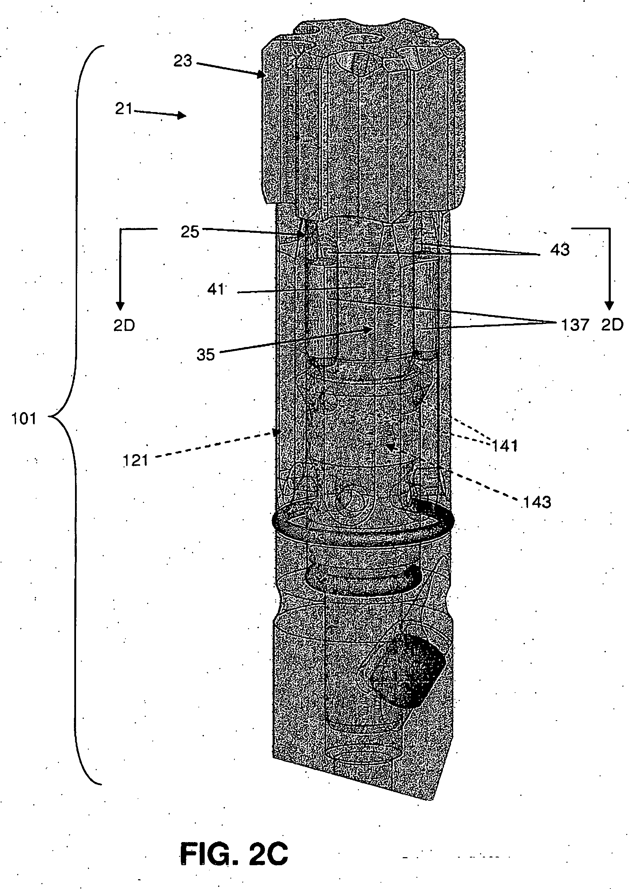

The first portion 131 of the axial opening 129 has an interior surface 133 comprising at least one axially extending recess 135, usually the same number of recesses as are provided on the exterior surface 41 of the first portion 35 of the shank portion 25. As seen in FIG. 2C (showing the toolholder 121 in phantom) and FIG. 2D, at least one ball or, or more typically, an axially extending pin 137 is disposed in each axially extending recess 43 of the exterior surface 41 of the first portion 35 of the shank portion 25 and in a corresponding axially extending recess 135 of the interior surface 133 of the first portion 131 of the axial opening 129 so that the cutting head 21 is non-rotatable relative to the toolholder 121. In this way, torque transmission between the toolholder 121 and the cutting head 21 is accomplished without the need for radially extending pins extending through both the toolholder and the cutting head.

The body 123 ordinarily comprises a plurality of flutes139. As seen, for example, in FIG. 2B, the plurality of flutes 29 on the cutting head 21 align with the plurality of flutes 139 on the body 123 when the ball(s) or axially extending pin(s) are disposed in the axially extending recess(es) 43 of the exterior surface 41 of the first portion 35 of the shank portion 25 and the axially extending recess(es) 135 of the interior surface 133 of the first portion 131 of the axial opening 129.

By providing the shank portion 25 with a third portion 39 that has a larger diameter than the second portion 37, the third portion 39 forms a lip that can be gripped to retain the shank portion of the cutting head 21 in the axial opening 129 of the toolholder 121. FIG. 2C shows an embodiment of a gripping structure in the form of a plurality of balls 141 that extend through holes in a clamping member 143 and into the recess defined by the third portion 39 and the second portion 37 of the shank portion 25 of the cutting head 25. Consequently, the depth of the recess defined by the third portion 39 and the second portion 37 should be of sufficient size to receive a gripping structure of sufficient size to hold the shank portion 25 in the toolholder 121 and resist forces tending to pull the cutting head 21 away from the toolholder during operation. The clamping member 143 is movably disposed in the axial opening 129.

While this invention has been illustrated and described in accordance with a preferred embodiment, it is recognized that variations and changes may be made therein without departing from the invention as set forth in the claims.

## Claims

1. A cutting head (21) for a cutting tool, comprising:
a cutting portion (23); and
a shank portion (25);
the cutting portion (23) comprising a plurality of integrally formed cutting edges (27);
the shank portion (25) having a first end (31) adjacent the cutting portion (23) and a second end (33),
wherein the shank portion (25) has a first portion (35) of the shank portion (25) having a first diameter, a second portion (37) of the shank portion (25) having a second diameter smaller than the first diameter, and a cylindrical third portion (39) of the shank portion (25) having a third diameter larger than the second diameter and smaller than the first diameter, the first portion (35) of the shank portion (25) being closer to the first end (31) of the shank portion (25) than the second and third portions (37 and 39) of the shank portion (25) and the third portion (39) of the shank portion (25) being disposed closer to the second end (33) of the shank portion (25) than the first and second portions (35 and 37) of the shank portion (25), the first portion (35) of the shank portion (25) having an exterior surface (41) comprising at least one axially extending recess (43) extending from an end (45) of the first portion (35) of the shank portion (25) closest to the second portion (37) of the shank portion (25) toward the first end (31) of the shank portion (25), and **characterised**
**in that** the cutting head (21) is entirely formed of a pressed and sintered cemented carbide material.

2. The cutting head (21) as set forth in claim 1, comprising a frustoconical transition region (47) between the third portion (39) of the shank portion (25) and the second portion (37) of the shank portion (25).

3. The cutting head (21) as set forth in claim 1, comprising a passage (53) extending from an end (55) of the cutting head (21) by the shank portion (25) toward an opposite end (57) of the cutting head (21) by the cutting portion (23).

4. The cutting head (21) as set forth in claim 3, **characterized in that** the passage (53) extends from the end of the cutting head (21) to the opposite end of the cutting head (21).

5. The cutting head (21) as set forth in claim 3, **characterized in that** the passage (53) extends along a central axis of the cutting portion (23).

6. The cutting head (21) as set forth in claim 1, comprising a frustoconical transition region (49) between the first portion (35) of the shank portion (25) and the second portion (37) of the shank portion (25).

7. The cutting head (21) as set forth in claim 6, **characterized in that** the at least one axially extending recess (43) ends on a surface (51) of the frustoconical transition region (49) between the first portion (35) of the shank portion (25) and the second portion (37) of the shank portion (25).

8. The cutting head (21) as set forth in claim 1, **characterized in that** the first portion (35) of the shank portion (25) is generally circular in cross-section.

9. The cutting head (21) as set forth in claim 1, **characterized in that** a surface of the at least one axially extending recess (43) has a radius that is less than a radius of the exterior surface (41) of the first portion (35) of the shank portion (25).

10. The cutting head (21) as set forth in claim 1, comprising at least three axially extending recesses (43).

11. The cutting head (21) as set forth in claim 1, **characterized in that** an external diameter of the cutting portion (23) is no greater than 15 mm and there are 6 cutting edges (27).

12. The cutting head (21) as set forth in claim 1, **characterized in that** an external diameter of the cutting portion (23) is no greater than 16 mm and there are 8 cutting edges (27).

13. The cutting head (21) as set forth in claim 1, **characterized in that** the first portion (35) of the shank portion (25) is cylindrical.

14. A cutting tool (101), comprising: ,
a cutting head (21) according to claim 1,
a toolholder (121) comprising a body (123) comprising a first end (125) and a second end (127), and an axial opening (129) extending from the first end (125) toward the second end (127), the axial opening (129) comprising a first portion (131) having a first diameter at least as large as the first diameter of the first portion (35) of the shank portion (25),
wherein the first portion (131) of the axial opening (129) has an interior surface (133) comprising at least one axially extending recess (135),
and wherein at least one ball or axially extending pin (137) is disposed in the at least one axially extending recess (43) of the exterior surface (41) of the first portion (35) of the shank portion (25) and the at least one axially extending recess (135) of the interior surface (133) of the first portion (131) of the axial opening (129) so that the cutting head (21) is non-rotatable relative to the toolholder (121).

## Patentansprüche

1. Schneidkopf (21) für ein Schneidwerkzeug, welcher aufweist:
einen Schneidbereich (23), und
einen Schaftbereich (25),
wobei der Schneidbereich (23) eine Mehrzahl einstückig angeformter Schneidkanten (27) aufweist,
der Schaftbereich(25) ein erstes Ende (31) angrenzend an den Schneidbereich (23) und ein zweites Ende (33) hat,
wobei der Schaftbereich (25) einen ersten Abschnitt (35) des Schaftbereiches (25) mit einem ersten Durchmesser hat, einen zweiten Abschnitt (37) des Schaftbereiches (25) mit einem zweiten Durchmesser hat, der kleiner als der erste Durchmesser ist, und einen zylindrischen dritten Abschnitt (39) des Schaftbereiches (25) hat, der einen dritten Durchmesser hat, welcher größer als der zweite Durchmesser und kleiner als der erste Durchmesser ist, wobei der erste Abschnitt (35) des Schaftbereiches (25) näher an dem ersten Ende (31) des Schaftbereiches (25) liegt als die zweiten und dritten Abschnitte (37 und 39) des Schaftbereiches (25), und der dritte Abschnitt (39) des Schaftbereiches (25) näher an dem zweiten Ende (33) des Schaftbereiches (25) angeordnet ist, als die ersten und zweiten Abschnitte (35 und 37) des Schaftbereiches (25), wobei der erste Abschnitt (35) des Schaftbereiches (25) eine Außenfläche (41) hat, die zumindest eine sich in axialer Richtung erstreckende Aussparung (43) hat, welche sich von einem Ende (45) des ersten Abschnittes (35) des Schaftbereiches (25), welches dem zweiten Abschnitt (37) des Schaftbereichs (25) am nächsten liegt, in Richtung des ersten Endes (31) des Schaftbereiches (25) erstreckt, **dadurch gekennzeichnet,**
**dass** der Schneidkopf (31) vollständig aus einem gepressten und gesinterten Sintercarbidmaterial hergestellt ist.

2. Schneidkopf (21) nach Anspruch 1, welcher einen kegelstumpfförmigen Übergangsabschnitt (47) zwischen dem dritten Abschnitt (39) des Schaftbereiches (25) und im zweiten Abschnitt (37) des Schaftbereiches (25) hat.

3. Schneidkopf (21) nach Anspruch 1, welcher einen Durchgang (53) aufweist, der sich von einem Ende (55) des Schneidkopfes (21) über den Schaftbereich (25) in Richtung eines entgegengesetzten Endes (57) des Schneidkopfes (31) über den Schneidbereich (23) erstreckt.

4. Schneidkopf (21) nach Anspruch 3, **dadurch gekennzeichnet, dass** der Durchgang (53) sich von dem Ende des Schneidkopfes (21) zu dem entgegengesetzten Ende des Schneidkopfes (21) erstreckt.

5. Schneidkopf (21) nach Anspruch 3, **dadurch gekennzeichnet, dass** der Durchgang (53) sich entlang einer zentralen Achse des Schneidbereiches (23) erstreckt.

6. Schneidkopf (21) nach Anspruch 1, welcher einen kegelstumpfförmigen Übergangsbereich (49) zwischen dem ersten Abschnitt (35) des Schaftbereiches (25) und dem zweiten Abschnitt (37) des Schaftbereiches (25) aufweist.

7. Schneideinsatz (21) nach Anspruch 6, **dadurch gekennzeichnet, dass** die zumindest eine sich in axialer Richtung erstreckende Aussparung (43) an einer Oberfläche (51) des kegelstumpfförmigen Übergangsbereiches (49) zwischen dem ersten Abschnitt (35) des Schaftbereiches (25) und dem zweiten Abschnitt (37) des Schaftbereiches (25) endet.

8. Schneidkopf (21) nach Anspruch 1, **dadurch gekennzeichnet, dass** der erste Abschnitt (35) des Schaftbereiches (25) einen in etwa kreisförmigen Querschnitt hat.

9. Schneidkopf (21) nach Anspruch 1, **dadurch gekennzeichnet, dass** eine Oberfläche der zumindest einen sich in axialer Richtung erstreckenden Aussparung (43) einen Radius hat, der geringer ist als der Radius der Außenfläche (41) des ersten Abschnittes (35) des Schaftbereiches (25).

10. Schneidkopf nach Anspruch 1, welcher zumindest drei sich in axialer Richtung erstreckende Aussparungen (43) hat.

11. Schneidkopf (21) nach Anspruch 1, **dadurch gekennzeichnet, dass** ein Außendurchmesser des Schneidbereiches (23) nicht mehr als 15 mm beträgt und dass sechs Schneidkanten (27) vorgesehen sind.

12. Schneidkopf (21) nach Anspruch 1, **dadurch gekennzeichnet, dass** der Außendurchmesser des Schneidbereiches (23) nicht mehr als 16 mm beträgt und dass acht Schneidkanten (27) vorgesehen sind.

13. Schneidkopf (21) nach Anspruch 1, **dadurch gekennzeichnet, dass** der erste Abschnitt (35) des Schaftbereiches (25) zylindrisch ist.

14. Schneidwerkzeug (101) welches aufweist:
einen Schneidkopf (21) gemäß Anspruch 1,
einen Werkzeughalter (121), der einen Körper (123) aufweist, der ein erstes Ende (125) und ein zweites Ende (127) hat, sowie eine axiale Öffnung (129), die sich von dem ersten Ende (125) in Richtung des zweiten Endes (127) erstreckt, wobei die axiale Öffnung (129) einen ersten Abschnitt (131) aufweist, der einen ersten Durchmesser hat, der zumindest so groß ist wie der erste Durchmesser des ersten Abschnittes (35) des Schaftbereiches (25),
wobei der erste Abschnitt (131) der axialen Öffnung (129) eine Innenfläche (133) hat, die zumindest eine sich in axialer Richtung erstreckende Aussparung (135) aufweist,
und wobei zumindest eine Kugel oder ein sich in axialer Richtung erstreckender Stift (137) in der zumindest einen sich in axialer Richtung erstreckenden Aussparung (43) der Außenfläche (41) des ersten Abschnittes (35) des Schaftbereiches (25) und der zumindest einen sich in axialer Richtung erstreckenden Aussparung (135) der Innenfläche (133) des ersten Abschnittes (131) der axialen Öffnung (129) angeordnet ist, sodass der Schneidkopf (21) relativ zu dem Werkzeughalter (121) nicht drehbar ist.

## Revendications

1. Tête de coupe (21) pour un outil de coupe, comprenant :
une partie de coupe (23), et
une partie d'arbre (25),
la partie de coupe (23) comprenant une pluralité d'arêtes de coupe formées de manière solidaire (27),
la partie d'arbre (25) ayant une première extrémité (31) adjacente à la partie de coupe (23) et une deuxième extrémité (33),
dans laquelle la partie d'arbre (25) a une première partie (35) de la partie d'arbre (25) ayant un premier diamètre, une deuxième partie (37) de la partie d'arbre (25) ayant un deuxième diamètre plus petit que le premier diamètre, et une troisième partie cylindrique (39) de la partie d'arbre (25) ayant un troisième diamètre plus grand que le deuxième diamètre et plus petit que le premier diamètre, la première partie (35) de la partie d'arbre (25) étant plus proche de la première extrémité (31) de la partie d'arbre (25) que les deuxième et troisième parties (37 et 39) de la partie d'arbre (25) et la troisième partie (39) de la partie d'arbre (25) étant disposée plus près de la deuxième extrémité (33) de la partie d'arbre (25) que les deuxième et troisième parties (35 et 37) de la partie d'arbre (25), la première partie (35) de la partie d'arbre (25) ayant une surface extérieure (41) comprenant au moins un évidement s'étendant axialement (43) s'étendant à partir d'une extrémité (45) de la première partie (35) de la partie d'arbre (25) la plus proche de la deuxième partie (37) de la partie d'arbre (25) en direction de la première extrémité (31) de la partie d'arbre (25), et **caractérisée**
**en ce que** la tête de coupe (21) est entièrement formée à partir d'un matériau de carbure cémenté pressé et fritté.

2. Tête de coupe (21) selon la revendication 1, comprenant une région de transition tronconique (47) entre la troisième partie (39) de la partie d'arbre (25) et la deuxième partie (37) de la partie d'arbre (25).

3. Tête de coupe (21) selon la revendication 1, comprenant un passage (53) s'étendant à partir d'une extrémité (55) de la tête de coupe (21) par la partie d'arbre (25) en direction d'une extrémité opposée (57) de la tête de coupe (21) par la partie de coupe (23).

4. Tête de coupe (21) selon la revendication 3, **caractérisée en ce que** le passage (53) s'étend à partir de l'extrémité de la tête de coupe (21) jusqu'à l'extrémité opposée de la tête de coupe (21).

5. Tête de coupe (21) selon la revendication 3, **caractérisée en ce que** le passage (53) s'étend le long d'un axe central de la partie de coupe (23).

6. Tête de coupe (21) selon la revendication 1, comprenant une région de transition tronconique (49) entre la première partie (35) de la partie d'arbre (25) et la deuxième partie (37) de la partie d'arbre (25).

7. Tête de coupe (21) selon la revendication 6, **caractérisée en ce que** le au moins un évidement s'étendant axialement (43) se termine sur une surface (51) de la région de transition tronconique (49) entre la première partie (35) de la partie d'arbre (25) et la deuxième partie (37) de la partie d'arbre (25).

8. Tête de coupe (21) selon la revendication 1, **caractérisée en ce que** la première partie (35) de la partie d'arbre (25) est de section transversale globalement circulaire.

9. Tête de coupe (21) selon la revendication 1, **caractérisée en ce qu'**une surface du au moins un évidement s'étendant axialement (43) a un rayon qui est inférieur à un rayon de la surface extérieure (41) de la première partie (35) de la partie d'arbre (25).

10. Tête de coupe (21) selon revendication 1, comprenant au moins trois évidements s'étendant axialement (43).

11. Tête de coupe (21) selon la revendication 1, **caractérisée en ce qu'**un diamètre externe de la partie de coupe (23) n'est pas plus grand que 15 mm et il existe 6 arêtes de coupe (27).

12. Tête de coupe (21) selon la revendication 1, **caractérisée en ce qu'**un diamètre externe de la partie de coupe (23) n'est pas plus grand que 16 mm et il existe 8 arêtes de coupe (27).

13. Tête de coupe (21) selon la revendication 1, **caractérisée en ce que** la première partie (35) de la partie d'arbre (25) est cylindrique.

14. Outil de coupe (101), comprenant :
une tête de coupe (21) selon la revendication 1,
un porte-outil (121) comprenant un corps (123) comprenant une première extrémité (125) et une deuxième extrémité (127), et une ouverture axiale (129) s'étendant à partir de la première extrémité (125) en direction de la deuxième extrémité (127), l'ouverture axiale (129) comprenant une première partie (131) ayant un premier diamètre au moins aussi grand que le premier diamètre de la première partie (35) de la partie d'arbre (25),
dans lequel la première partie (131) de l' ouverture axiale (129) a une surface intérieure (133) comprenant au moins un évidement s'étendant axialement (135),
et dans lequel au moins une bille ou tige s'étendant axialement (137) est disposée dans le au moins un évidement s'étendant axialement (43) de la surface extérieure (41) de la première partie (35) de la partie d'arbre (25) et le au moins un évidement s'étendant axialement (135) de la surface intérieure (133) de la première partie (131) de l'ouverture axiale (129) de sorte que la tête de coupe (21) ne puisse à tourner par rapport au porte-outil (121).
